# FASCICULE DE BREVET EUROPEEN

(11) **EP 4 010 252 B1**
(45) Date de publication et mention de la délivrance du brevet: **02.07.2025**
(21) Numéro de dépôt: 20746686.3
(22) Date de dépôt: 03.08.2020
(51) Int. Cl.: B64D 27/24, B64D 27/02, B64C 1/16, B64D 35/00

(54) **AERONEF**
LUFTFAHRZEUG
AIRCRAFT

(30) Priorité: 05.08.2019 FR 1908985
(43) Date de publication de la demande: 15.06.2022
(73) Titulaire: Conseil et Technique, 31650 Lauzerville (FR)
(72) Inventeur: VALEMBOIS, Guy, 31650 LAUZERVILLE (FR)
(74) Mandataire: Cabinet Bleger-Rhein-Poupon
(86) Numéro de dépôt international: PCT/EP2020/071810
(87) Numéro de publication internationale: WO 2021/023712

(56) Documents cités:
- WO-A1-2014/108125
- WO-A2-2007/117731
- WO-A2-2014/166811
- CH-A- 235 699
- CN-A- 109 502 024
- DE-A1- 102013 015 364
- DE-A1- 4 439 791
- DE-U- 1 884 174
- GB-A- 2 365 830

## Description

La présente invention a pour objet un aéronef.

Les aéronefs actuels sont équipés de réacteurs, et la propulsion est générée majoritairement par la soufflante de ces réacteurs. Le flux d'air est canalisé par un carénage externe coopérant avec le grand diamètre des pales de la soufflante.

Au moment du premier choc pétrolier, afin de réduire la consommation de carburant, il avait été imaginé des moteurs dénommés « propfan », qui utilisent des soufflantes de très grand diamètre, et généralement à deux étages contrarotatifs, mais qui étaient sans carénage externe car leurs dimensions étaient telles que celui-ci aurait été difficile à intégrer.

Actuellement, dans le même souci d'économie de carburant, puisque ce concept permettrait un gain potentiel de 20 à 25 % sur la consommation énergétique, il est envisagé d'équiper des avions de lignes avec de tels moteurs.

Cependant, un tel projet présente de nombreux inconvénients. Ainsi, du fait du très grand diamètre des soufflantes, il est nécessaire de repenser l'architecture des avions, ce qui génère des coûts très importants. Il n'est en effet pas possible de placer de tels moteurs sous les ailes, et il est généralement projeté de les installer au-dessus des voilures, notamment au-dessus de l'empennage.

De plus, le concept utilise le mode de motorisation traditionnel des turboréacteurs, ce qui ne permet pas l'évolution vers des modes énergétiques nouveaux notamment électrique et hybride.

On notera un autre inconvénient de ces moteurs « propfan », à savoir le bruit élevé qu'ils génèrent du fait de l'absence de carénage. Si cet inconvénient a été en partie résolu par l'utilisation de pales d'un profil particulier, il n'a pas été complètement éliminé.

Le document WO 2014/108125 A décrit un aéronef sur lequel un rotor à pales entoure en rotation le fuselage pour produire une propulsion et un ensemble moteur pour entraîner le rotor par le biais d'une transmission.

La présente invention a pour but de proposer un d'aéronef permettant de résoudre tous les inconvénients précités.

La présente invention a notamment pour but, non seulement de réaliser des économies de carburant, de permettre de conserver l'architecture actuelle des aéronefs, mais également de permettre d'envisager une motorisation électrique ou hybride.

L'invention propose un aéronef selon la revendication 1.

On comprendra que le propulseur d'un tel aéronef présente les avantages d'un moteur à soufflante de grand diamètre, sans être d'encombrement destructif pour l'aéronef, puisque l'architecture de l'aéronef peut rester de type conventionnel, et ne pas présenter sur les voilures des protubérances préjudiciables au bon comportement aérodynamique, tant sur la voilure principale que sur l'empennage.

D'autre part, l'incorporation de la base du propulseur dans la coque constituant le fuselage, libère un espace qui permet, outre de ne pas entraver la circulation à l'intérieur de l'aéronef

Selon une caractéristique additionnelle de l'aéronef selon l'invention, le propulseur comporte en outre extérieurement au rotor, un carénage, en sorte de délimiter avec la base, à laquelle il est solidarisé par des jambes, un espace dans lequel évolue au moins un rotor.

La présence du carénage extérieur permet de confiner le flux aérodynamique pour optimiser la performance du rotor, et il évite les problèmes de bruits.

Selon une autre caractéristique additionnelle de l'aéronef selon l'invention, le rotor est muni de moyens de réglage de l'incidence des pales.

Une telle caractéristique permet d'optimiser le fonctionnement du propulseur selon la vitesse de l'aéronef.

Selon une caractéristique additionnelle de l'aéronef selon l'invention, le propulseur comporte deux rotors contrarotatifs.

Les moyens moteurs peuvent être de différentes formes, le but étant de faire tourner le rotor du propulseur. Le rotor peut par exemple comporter du côté intérieur une couronne dentée sur laquelle s'engrène un pignon, lui-même mû par un moteur.

Selon l'invention, les moyens moteurs consistent en des moteurs électriques toriques de type brushless, à bobinage fixe et rotor périphérique mobile, le stator étant incorporé à la base fixe incorporée à la coque du fuselage et comporte des bobines, tandis que ledit rotor porte les pales et comporte du côté intérieur des aimants permanents.

Selon cette conception, l'espace interne au propulseur est libre, en sorte que ledit propulseur peut être disposé où que ce soit le long de l'aéronef, sans interrompre la cabine.

Selon une autre caractéristique additionnelle de l'aéronef selon l'invention, le stator comporte plusieurs paires de pôles.

L'aéronef selon l'invention peut être équipé d'un ou de plusieurs propulseurs tels que définis précédemment.

Selon une autre caractéristique additionnelle de l'aéronef selon l'invention, la coque qui constitue le fuselage comporte un espace qui passe au travers du propulseur et qui est divisé horizontalement et longitudinalement par un plancher qui délimite supérieurement un espace destiné au transport, et en dessous un espace destiné à contenir les moyens d'alimentation desdits moyens moteurs.

Les avantages et les caractéristiques de l'aéronef selon l'invention, ressortiront plus clairement de la description qui suit et qui se rapporte au dessin annexé, lequel en représente un mode de réalisation non limitatif.

Dans le dessin annexé :
- la figure 1 représente une vue en perspective d'un aéronef selon l'invention.
- la figure 2 représente une schématique partielle en coupe selon un plan longitudinal du même aéronef.
- la figure 3 représente un détail de la figure 2.
- la figure 4 représente une vue schématique en élévation d'une partie du moteur de l'aéronef selon l'invention.

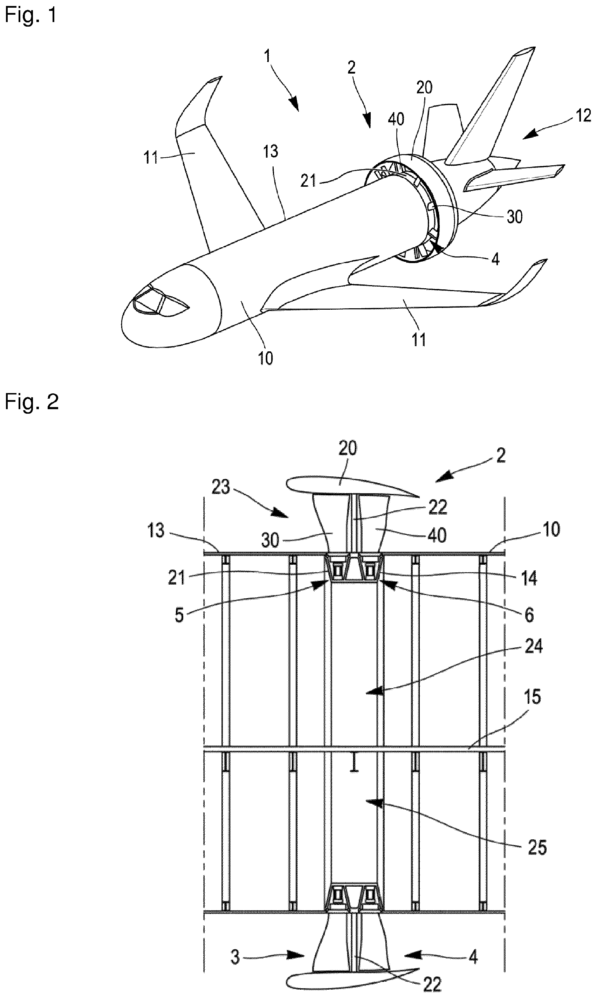

En référence à la figure 1, on peut voir un aéronef 1 selon l'invention, lequel est de conception générale classique, à savoir qu'il comporte un fuselage 10 équipé dans sa région médiane de deux ailes 11, et à l'arrière d'un empennage 12.

L'aéronef 1 est muni d'un système propulsif constitué d'un propulseur 2 qui constitue une section de la coque 13 formant le fuselage 10, s'intercalant entre des sections courantes de ce dernier. Le propulseur 2 est de forme annulaire, disposé en partie autour du fuselage 10, en l'occurrence en avant de l'empennage 12, et faisant saillie du fuselage.

Dans ce mode de réalisation, le propulseur 2 comporte deux rotors 3 et 4, contrarotatifs, munis de pales, respectivement 30 et 40, et qui font saillie du plan défini par la paroi extérieure de la coque 13, pour évoluer entre le fuselage 1 et un carénage 20, dont on notera qu'il est possible de s'affranchir.

La figure 2 montre un mode de réalisation particulier d'un propulseur 2 d'aéronef motorisé au moyen de moteurs électriques toriques de type brushless, à bobinage fixe, et que le propulseur 2 se compose d'une base fixe 21 de forme annulaire, d'un carénage 20 solidarisé à distance à la base 21 au travers de jambes 22, et de deux rotors 3 et 4, évoluant dans l'espace annulaire 23, délimité par la base 21 et le carénage 20.

On peut également voir que la forme annulaire du propulseur 2 permet de dégager un espace important à l'intérieur du fuselage 10, espace divisé horizontalement et longitudinalement par le plancher 15 de la coque 13, pour créer au-dessus un espace 24 pour le transport, et en dessous une partie soute 25 qui peut être destinée à loger un générateur électrique de type, non limitativement, turbine à gaz ou batterie à hydrogène, ou bien des moyens moteurs, non représentés, autres qu'électriques, et destinés à l'entraînement du propulseur 2.

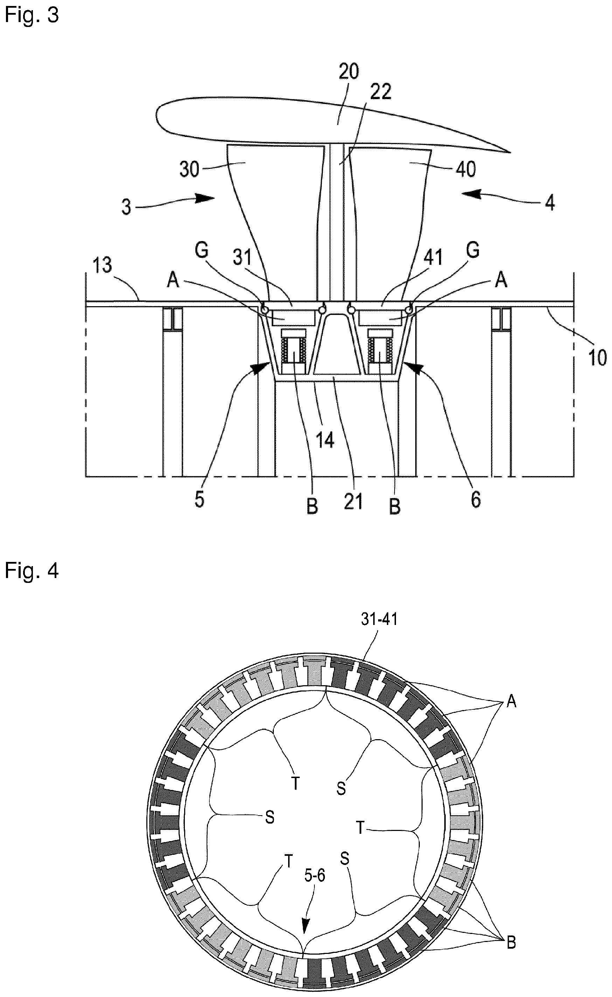

En référence également à la figure 3, on peut voir que la base 21 est incorporée à une structure portante 14 en forme de gorge annulaire faisant partie intégrante de la coque 13, et qui loge deux stators annulaires 5 et 6, coopérant chacun avec l'un des rotors, respectivement 3 et 4.

Les stators 5 et 6 comportent des bobines B, disposées et réparties périphériquement, tandis que chacun des rotors 3 et 4 comporte un élément en forme de bague respectivement 31 et 41, monté en rotation libre sur la structure portante 21, au travers de moyens de roulement ou glissement G, duquel font saillie extérieurement les pales 30 et 40, et qui présente intérieurement des aimants permanents A disposés pour se tenir à faible distance des bobines B.

La dimension périphérique du propulseur 2 permet que ce moteur intègre un grand nombre de pôles, ce qui présente des avantages, notamment une redondance facilement gérable du ou des moteurs, un positionnement et une surface d'échange facilitant le refroidissement naturel, un moteur quasi linéaire pouvant être réalisé par morceaux, chaque morceau utilisant un secteur angulaire du tore afin de créer la redondance.

Ainsi, en référence à la figure 4, on voit une partie d'un rotor, 3 - 4, à savoir l'élément 31 - 41 et ses aimants A, et une partie d'un stator, 5 - 6, à savoir ses bobines B. Le stator 5 - 6, comporte une succession en alternance de secteurs angulaires S et T, créant une succession de pôles.

## Revendications

1. Aéronef (1) comportant fuselage (10), une voilure (11) et un empennage (12), comportant en outre au moins un propulseur (2) présentant la forme générale d'un anneau, et comprenant d'une part un rotor (3, 4) constitué d'un élément annulaire (31, 41) duquel font saillie vers l'extérieur des pales (30, 40), et d'autre part une base (21) également annulaire, coaxiale audit élément annulaire (31, 41), et sur laquelle peut tourner ledit élément annulaire (31, 41) sous l'action de moyens moteurs, ladite base (21) étant coaxiale audit fuselage et est intégrée à la coque (13) qui constitue celui-ci, tandis que les pales (30, 40) dudit rotor (3, 4) sont disposées extérieurement à ladite coque (13), **caractérisé en ce que** les moyens moteurs consistent en des moteurs électriques toriques de type brushless, à bobinage fixe et rotor périphérique mobile (31, 41), le stator (5, 6) étant incorporé à la base fixe (21) solidaire du fuselage (10) et comporte des bobines (B) tandis que ledit rotor (31, 41) porte les pales (30 ; 40) et comporte du côté intérieur des aimants permanents (A), et **en ce que** lesdits moyens moteurs consistent en des moteurs électriques toriques alimentés par un générateur d'électricité.

2. Aéronef (1) selon la revendication 1, **caractérisé en ce que** le propulseur (2) comporte en outre extérieurement au rotor (3, 4), un carénage (20), en sorte de délimiter avec la base (21), à laquelle il est solidarisé par des jambes (22), un espace (23) dans lequel évolue au moins un rotor (3 ; 4).

3. Aéronef (1) selon la revendication 1 ou la revendication 2, **caractérisé en ce que** le rotor (3 ; 4) est muni de moyens de réglage de l'incidence des pales (30 ; 40).

4. Aéronef (1) selon l'une quelconque des revendications 1 à 3, **caractérisé en ce qu'**il comporte deux rotors contrarotatifs (3, 4).

5. Aéronef (1) selon l'une quelconque des revendications 1 à 4 **caractérisé en ce que** le stator (5, 6) comporte plusieurs paires de pôles.

6. Aéronef (1) selon l'une quelconque des revendications 1 à 5, **caractérisé en ce que** le générateur d'électricité consiste en une turbine à gaz.

7. Aéronef (1) selon l'une quelconque des revendications 1 à 6, **caractérisé en ce que** la coque (13) qui constitue le fuselage (10) comporte un espace qui passe au travers du propulseur (2) et qui est divisé horizontalement et longitudinalement par un plancher (15) qui délimite supérieurement un espace (24) destiné au transport, et en dessous un espace (25) destiné à contenir les moyens d'alimentation desdits moyens moteurs.

## Patentansprüche

1. Luftfahrzeug (1) aufweisend einen Rumpf (10), eine Tragfläche (11) und ein Leitwerk (12), ferner aufweisend mindestens ein Triebwerk (2), das die allgemeine Form eines Rings hat und aufweist: einerseits einen Rotor (3, 4), der aus einem ringförmigen Element (31, 41) besteht, von dem aus Rotorblätter (30, 40) nach außen vorspringen, und andererseits eine ebenfalls ringförmige Basis (21), die koaxial zu dem ringförmigen Element (31, 41) ist und über die sich das ringförmige Element (31, 41) unter der Einwirkung von Motoreinrichtungen drehen kann, wobei die Basis (21) koaxial zu dem Rumpf ist und integral mit der Schale (13), die den Rumpf bildet, ist, während die Rotorblätter (30, 40) des Rotors (3, 4) außerhalb der Schale (13) angeordnet sind, **dadurch gekennzeichnet, dass** die Motoreinrichtungen aus bürstenlosen torischen Elektromotoren mit stationärer Spulenanordnung und mobilem peripherem Rotor (31, 41) bestehen, wobei der Stator (5, 6) in der mit dem Rumpf integralen stationären Basis (21) eingebaut ist und Spulen (B) aufweist, während der Rotor (31, 41) die Rotorblätter (30; 40) trägt und an der Innenseite Permanentmagnete (A) aufweist, und dadurch, dass die Motoreinrichtungen aus torischen Elektromotoren bestehen, die von einem Elektrizitätsgenerator gespeist werden.

2. Luftfahrzeug (1) nach Anspruch 1, **dadurch gekennzeichnet, dass** das Triebwerk (2) ferner außerhalb des Rotors (3, 4) eine Verkleidung (20) aufweist, um so zusammen mit der Basis (21), an der sie über Beine (22) angebracht ist, einen Raum (23) zu begrenzen, in dem sich mindestens ein Rotor (3; 4) bewegt.

3. Luftfahrzeug (1) nach Anspruch 1 oder Anspruch 2, **dadurch gekennzeichnet, dass** der Rotor (3; 4) mit Einrichtungen zur Steuerung des Anstellwinkels der Rotorblätter (30; 40) versehen ist.

4. Luftfahrzeug (1) nach einem der Ansprüche 1 bis 3, **dadurch gekennzeichnet, dass** es zwei gegenläufig rotierende Rotoren (3 4) aufweist.

5. Luftfahrzeug (1) nach einem der Ansprüche 1 bis 4, **dadurch gekennzeichnet, dass** der Stator (5, 6) mehrere Paare Pole aufweist.

6. Luftfahrzeug (1) nach einem der Ansprüche 1 bis 5, **dadurch gekennzeichnet, dass** der Elektrizitätsgenerator aus einer Gasturbine besteht.

7. Luftfahrzeug (1) nach einem der Ansprüche 1 bis 6, **dadurch gekennzeichnet, dass** die Schale (13), die den Rumpf (10) bildet, einen Raum aufweist, der sich durch das Triebwerk (2) hindurch erstreckt und der horizontal und in Längsrichtung von einer Trennwand (15) unterteilt wird, die einen Raum (24) oberhalb, der für Transport bestimmt ist, und einen Raum (25) unterhalb, der zum Unterbringen der Speiseeinrichtungen der Motoreinrichtungen bestimmt ist, definiert.

## Claims

1. Aircraft (1) including a fuselage (10), a wing (11) and a tail assembly (12), further including at least one thruster (2) having the general shape of a ring, and comprising on the one hand a rotor (3, 4) consisting of an annular element (31, 41) from which the blades (30, 40) protrude outwardly, and on the other hand a base (21) also annular, coaxial with said annular element (31, 41), and on which said annular element (31, 41) can rotate under the action of motor means, said base (21) being coaxial with said fuselage and is integrated in the shell (13) which constitutes it, while the blades (30, 40) of said rotor (3, 4) are disposed externally to said shell (13), **characterised in that** the motor means consist of brushless-type toric electric motors, with fixed winding and movable peripheral rotor (31, 41), the stator (5, 6) being incorporated in the fixed base (21) integral with the fuselage (10) and includes coils (B) while said rotor (31, 41) carries the blades (30; 40) and includes on the inner side permanent magnets (A), and **in that** said motor means consist of toric electric motors powered by an electricity generator.

2. Aircraft (1) according to claim 1, **characterised in that** the thruster (2) furthermore comprises, externally to the rotor (3, 4), a fairing (20), so as to delimit with the base (21), to which it is secured by legs (22), a space (23) in which at least one rotor (3; 4) moves.

3. Aircraft (1) according to claim 1 or claim 2, **characterised in that** the rotor (3; 4) is provided with means for adjusting the angle of incidence of the blades (30; 40).

4. Aircraft (1) according to any one of claims 1 to 3, **characterised in that** it includes two contra-rotating rotors (3, 4).

5. Aircraft (1) according to any one of claims 1 to 4, **characterised in that** the stator (5, 6) include several pairs of poles.

6. Aircraft (1) according to any one of claims 1 to 5, **characterised in that** the electricity generator consists of a gas turbine.

7. Aircraft (1) according to any one of claims 1 to 6, **characterised in that** the shell (13) which constitutes the fuselage (10) includes a space that passes through the thruster (2) and which is divided horizontally and longitudinally by a floor (15) which upperly delimits a space (24) intended for transport, and below it a space (25) intended to contain the power supply means of said engine means.
